(19) Europäisches Patentamt
European Patent Office
Office européen des brevets

(11) **EP 4 145 658 A2**

(12) **EUROPÄISCHE PATENTANMELDUNG**

(43) Veröffentlichungstag:
**08.03.2023   Patentblatt 2023/10**

(21) Anmeldenummer: 22191489.8

(22) Anmeldetag: **22.08.2022**

(51) Internationale Patentklassifikation (IPC):
**H02J 1/10** (2006.01)        **H02J 7/00** (2006.01)

(52) Gemeinsame Patentklassifikation (CPC):
**H02J 7/0013; H02J 1/106; H02J 7/0025;
H02J 7/00304; H02J 7/00306; H02J 7/0063;
H02J 7/007182;** H02J 2207/20; H02J 2310/48

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **01.09.2021   DE 102021209613**

(71) Anmelder: **Siemens Mobility GmbH
81739 München (DE)**

(72) Erfinder:
- **Hassler, Stefan
  91281 Kirchenthumbach, OT Neuzirkendorf (DE)**
- **Probst, Sebastian
  90408 Nürnberg (DE)**

(74) Vertreter: **Siemens Patent Attorneys
Postfach 22 16 34
80506 München (DE)**

(54)   **ANORDNUNG MIT BATTERIESYSTEM UND VERFAHREN ZU DEREN BETRIEB**

(57)   Die Erfindung bezieht sich unter anderem auf ein Verfahren zum Betreiben eines zwei oder mehr Batterien (B1-Bn) aufweisenden Batteriesystems (100). Erfindungsgemäß ist vorgesehen, dass jeder Batterie (B1-Bn) jeweils ein Gewichtungswert (G1-Gn) zugeordnet wird, der einen Sollanteil der jeweiligen Batterie (B1-Bn) bei der Aufteilung von Entnahme- oder Ladebelastung aus dem bzw. in das Batteriesystem (100) auf die Batterien (B1-Bn) beschreibt, im Falle einer externen Belastungsanforderung (BA) an das Batteriesystem (100) die Batterien (B1-Bn) gemäß ihrem jeweiligen Gewichtungswert (G1-Gn) belastet werden, sofern ihr Belastungsvermögen dies ermöglicht, und andernfalls, wenn eine oder mehr Batterien (B1-Bn) überlastet werden würden, die betroffene Batterie (B1-Bn) oder die betroffenen Batterien (B1-Bn) mit ihrer jeweiligen Grenzbelastung belastet werden und die von den betroffenen Batterien (B1-Bn) nicht geleistete Restbelastung (Rb) auf die noch nicht überlasteten Batterien (B1-Bn) verteilt wird.

FIG 3

EP 4 145 658 A2

**Beschreibung**

Im Bereich der Schienenfahrzeugtechnik werden heutzutage vermehrt hybride Schienenfahrzeuge eingesetzt, die im Falle eines Betriebs in elektrifizierten Abschnitten eines Streckennetzes von einem externen Energieversorgungsnetz gespeist werden und im Falle eines Betriebs in nichtelektrifizierten Abschnitten auf der Basis von in Batterien gespeicherter Energie betrieben werden können.

Bei Schienenfahrzeugen, die mit Batteriesystemen ausgestattet sind, die eine Vielzahl an parallel betriebenen Batterien aufweisen, besteht das Problem, die Belastung der Batterien so zu wählen, dass die Lebensdauer der Batterien und damit die Lebensdauer des Batteriesystems insgesamt möglichst groß bleibt.

Der Erfindung liegt demgemäß die Aufgabe zugrunde, ein Verfahren zum Betreiben eines Batteriesystems anzugeben, das eine möglichst geschickte Aufteilung der Belastung auf die Batterien des Batteriesystems ermöglicht.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass jeder Batterie jeweils ein Gewichtungswert zugeordnet wird, der einen Sollanteil der jeweiligen Batterie bei der Aufteilung von Entnahme- oder Ladebelastung aus dem bzw. in das Batteriesystem auf die Batterien beschreibt, im Falle einer externen Belastungsanforderung an das Batteriesystem die Batterien gemäß ihrem jeweiligen Gewichtungswert belastet werden, sofern ihr Belastungsvermögen dies ermöglicht, und andernfalls, wenn eine oder mehr Batterien überlastet werden würden, die betroffene Batterie oder die betroffenen Batterien mit ihrer jeweiligen Grenzbelastung belastet werden und die von den betroffenen Batterien nicht geleistete Restbelastung auf die noch nicht überlasteten Batterien verteilt wird.

Ein wesentlicher Vorteil des erfindungsgemäßen Verfahrens ist darin zu sehen, dass dieses eine Verteilung der Belastung auf die Batterien des Batteriesystems gemäß zugeordneter Gewichtungswerte ermöglicht, sodass individuelle Zustände der Batterien, wie Alterung, Ladezustand etc. bei der Verteilung berücksichtigt werden können. Es ist also nicht nötig, alle Batterien stets in gleicher Art und Weise zu betreiben, sondern es kann individuell durch Zuordnung geeigneter Gewichtungswerte eine batteriegeeignete bzw. batterieindividuelle Belastung festgelegt werden.

Die Verteilung der Restbelastung erfolgt vorzugsweise in einem oder mehreren aufeinanderfolgenden Verteilschritten.

In jedem Verteilschritt wird vorzugsweise jeweils in einem ersten Teilschritt geprüft, ob noch Restbelastung zu verteilen ist. In einem zweiten Teilschritt wird vorzugsweise die noch zu verteilende Restbelastung auf die verbliebenen, noch nicht überlasteten Batterien gemäß ihrem jeweiligen Gewichtungswert verteilt, sofern ihr Leistungsvermögen dies ermöglicht; andernfalls, wenn eine oder mehr Batterien überlastet werden würden, werden die betroffene Batterie oder die betroffenen Batterien vorzugsweise mit ihrer jeweiligen Grenzbelastung belastet. Die von den betroffenen Batterien nicht geleistete, also noch verbleibende Restbelastung wird vorzugsweise in einem nachfolgenden Verteilschritt weiter verteilt.

Bei einer bevorzugten Ausgestaltung des Verfahrens ist vorgesehen, dass die Entnahme- und Ladebelastung, die Restbelastung und die Grenzbelastung jeweils strombezogen sind und jeder Batterie jeweils ein Gewichtungswert zugeordnet wird, der einen Sollstromanteil der jeweiligen Batterie bei der Aufteilung von Entnahme- oder Ladestrom aus dem bzw. in das Batteriesystem auf die Batterien beschreibt, im Falle einer externen Stromanforderung an das Batteriesystem die Batterien gemäß ihrem jeweiligen Gewichtungswert strommäßig belastet werden, sofern ihr strombezogenes Belastungsvermögen dies ermöglicht, und andernfalls, wenn eine oder mehr Batterien überlastet werden würden, die betroffene Batterie oder die betroffenen Batterien mit ihrem jeweiligen maximalen Grenzstrom belastet werden und der von den betroffenen Batterien nicht aufgenommene oder abgegebene Reststrom auf die noch nicht überlasteten Batterien verteilt wird.

Bei der letztgenannten Verfahrensvariante ist es vorteilhaft, wenn die Verteilung des Reststroms in einem oder mehreren aufeinanderfolgenden Verteilschritten erfolgt, wobei in jedem Verteilschritt jeweils in einem ersten Teilschritt geprüft wird, ob noch Reststrom zu verteilen ist, in einem zweiten Teilschritt der noch zu verteilende Reststrom auf die verbliebenen, noch nicht überlasteten Batterien gemäß ihrem jeweiligen Gewichtungswert verteilt wird, sofern ihr strombezogenes Belastungsvermögen dies ermöglicht, und andernfalls, wenn eine oder mehr Batterien überlastet werden würden, die betroffene Batterie oder die betroffenen Batterien mit ihrem jeweiligen Grenzstrom belastet werden und der von den betroffenen Batterien nicht abgegebene oder aufgenommene Reststrom in einem nachfolgenden Verteilschritt weiter verteilt wird.

Bei einer anderen bevorzugten Ausgestaltung des Verfahrens ist vorgesehen, dass die Entnahme- und Ladebelastung, die Restbelastung und die Grenzbelastung jeweils leistungsbezogen sind und jeder Batterie jeweils ein Gewichtungswert zugeordnet wird, der einen Sollleistungsanteil der jeweiligen Batterie bei der Aufteilung von Entnahme- oder Ladeleistung aus dem bzw. in das Batteriesystem auf die Batterien beschreibt, im Falle einer externen Leistungsforderung an das Batteriesystem die Batterien gemäß ihrem jeweiligen Gewichtungswert leistungsmäßig belastet werden, sofern ihr Leistungsvermögen dies ermöglicht, und andernfalls, wenn eine oder mehr Batterien überlastet werden würden, die betroffene Batterie oder die betroffenen Batterien mit ihrer jeweiligen maximalen Grenzleistung betrieben und die von den betroffenen Batterien nicht übernommene Restleistung auf die noch nicht überlasteten Batterien verteilt wird.

Bei der letztgenannten Verfahrensvariante ist es vorteilhaft, wenn die Verteilung der Restleistung in einem oder mehreren aufeinanderfolgenden Verteilschritten erfolgt, wobei in jedem Verteilschritt jeweils in einem ersten Teilschritt geprüft wird, ob noch Restleistung zu verteilen ist, in einem zweiten Teilschritt die noch zu verteilende Restleistung auf die verbliebenen, noch nicht überlasteten Batterien gemäß ihrem jeweiligen Gewichtungswert verteilt wird, sofern ihr Leistungsvermögen dies ermöglicht, und andernfalls, wenn eine oder mehr Batterien überlastet werden würden, die betroffene Batterie oder die betroffenen Batterien mit ihrer jeweiligen Grenzleistung betrieben werden und in die von den betroffenen Batterien nicht geleistete, also noch verbleibende Restleistung in einem nachfolgenden Verteilschritt weiter verteilt wird.

Der Gewichtungswert wird vorzugsweise in Abhängigkeit vom Ladezustand (beispielsweise in Abhängigkeit vom Quotienten Qist/Qmax zwischen der gespeicherten Ladung Qist und der maximal speicherbaren Ladung Qmax) der jeweiligen Batterie ermittelt.

Alternativ oder zusätzlich ist es vorteilhaft, wenn der Gewichtungswert in Abhängigkeit vom Energiezustand (beispielsweise in Abhängigkeit vom Quotienten Eist/Emax zwischen der gespeicherten Energie Eist und der maximal speicherbaren Energie Emax) der jeweiligen Batterie ermittelt wird.

Alternativ oder zusätzlich ist es vorteilhaft, wenn der Gewichtungswert in Abhängigkeit von der Batterietemperatur der jeweiligen Batterie ermittelt wird.

Alternativ oder zusätzlich ist es vorteilhaft, wenn der Gewichtungswert in Abhängigkeit vom Alterungszustand und/oder des Alters der jeweiligen Batterie ermittelt wird.

Alternativ oder zusätzlich ist es vorteilhaft, wenn der Gewichtungswert für den Ladebetrieb und den Entladebetrieb unterschiedlich festgelegt wird.

Die Erfindung bezieht sich darüber hinaus auf eine Anordnung mit einem zwei oder mehr Batterien aufweisenden Batteriesystem. Erfindungsgemäß ist vorgesehen, dass eine Steuereinrichtung vorhanden ist, die jeder Batterie jeweils einen Gewichtungswert zuordnet, der einen Sollanteil der jeweiligen Batterie bei der Aufteilung von Entnahme- oder Ladebelastung aus dem bzw. in das Batteriesystem auf die Batterien beschreibt, die Steuereinrichtung im Falle einer externen Belastungsanforderung an das Batteriesystem die Batterien gemäß ihrem jeweiligen Gewichtungswert belastet, sofern ihr Belastungsvermögen dies ermöglicht, und die Steuereinrichtung andernfalls, wenn eine oder mehr Batterien überlastet werden würden, die betroffene Batterie oder die betroffenen Batterien mit ihrer jeweiligen Grenzbelastung belastet und die von den betroffenen Batterien nicht geleistete Restbelastung auf die noch nicht überlasteten Batterien verteilt.

Bezüglich der Vorteile der erfindungsgemäßen Anordnung und deren vorteilhafter Ausgestaltungen sei auf die obigen Ausführungen im Zusammenhang mit dem erfindungsgemäßen Verfahren und dessen vorteilhafter Ausgestaltungen verwiesen.

Vorteilhaft ist es, wenn die Steuereinrichtung eine Recheneinrichtung und einen Speicher umfasst, in dem ein Gewichtungswertermittlungsmodul und ein Belastungsverteilmodul abgespeichert sind, wobei die Recheneinrichtung bei Ausführung des Gewichtungswertermittlungsmoduls für jede der Batterien jeweils einen Gewichtungswert ermittelt, der den Sollanteil der jeweiligen Batterie bei der Aufteilung von Entnahme- oder Ladebelastung aus dem bzw. in das Batteriesystem beschreibt, und wobei die Recheneinrichtung bei Ausführung des Belastungsverteilmoduls auf eine externe Belastungsanforderung hin die Belastung auf die Batterien auf der Basis der Gewichtungswerte verteilt und ausgangsseitig entsprechende Steuersignale zur Ansteuerung des Batteriesystems erzeugt.

Die Erfindung bezieht sich darüber hinaus auf ein Fahrzeug, insbesondere Schienenfahrzeug. Erfindungsgemäß ist vorgesehen, dass das Fahrzeug mit einer Anordnung, wie sie oben beschrieben worden ist, ausgestattet ist bzw. ihr Batteriesystem so betrieben wird, wie dies oben im Zusammenhang mit dem erfindungsgemäßen Verfahren und dessen vorteilhafter Ausgestaltungen beschrieben worden ist.

Bezüglich der Vorteile des erfindungsgemäßen Fahrzeugs und dessen vorteilhafter Ausgestaltungen sei auf die obigen Ausführungen im Zusammenhang mit dem erfindungsgemäßen Verfahren und dessen vorteilhafter Ausgestaltungen verwiesen.

Die Erfindung wird nachfolgend anhand von Ausführungsbeispielen näher erläutert; dabei zeigen beispielhaft

Figur 1      ein Ausführungsbeispiel für ein erfindungsgemäßes Schienenfahrzeug, das ein Batteriesystem und eine Steuereinrichtung zur Ansteuerung der Batterien des Batteriesystems aufweist,

Figur 2      ein Ausführungsbeispiel für die Steuereinrichtung gemäß Figur 1 näher im Detail,

Figur 3      eine vorteilhafte Arbeitsweise der Steuereinrichtung gemäß Figur 2 anhand eines Flussdiagramms und

Figur 4      ein Ausführungsbeispiel für ein erfindungsgemäßes Schienenfahrzeug, das ein Batteriesystem mit vier Batterien aufweist, die auf eine Belastungsanforderung hin im Entnahmebetrieb betrieben werden.

In den Figuren werden der Übersicht halber für identische oder vergleichbare Komponenten stets dieselben Bezugszeichen verwendet.

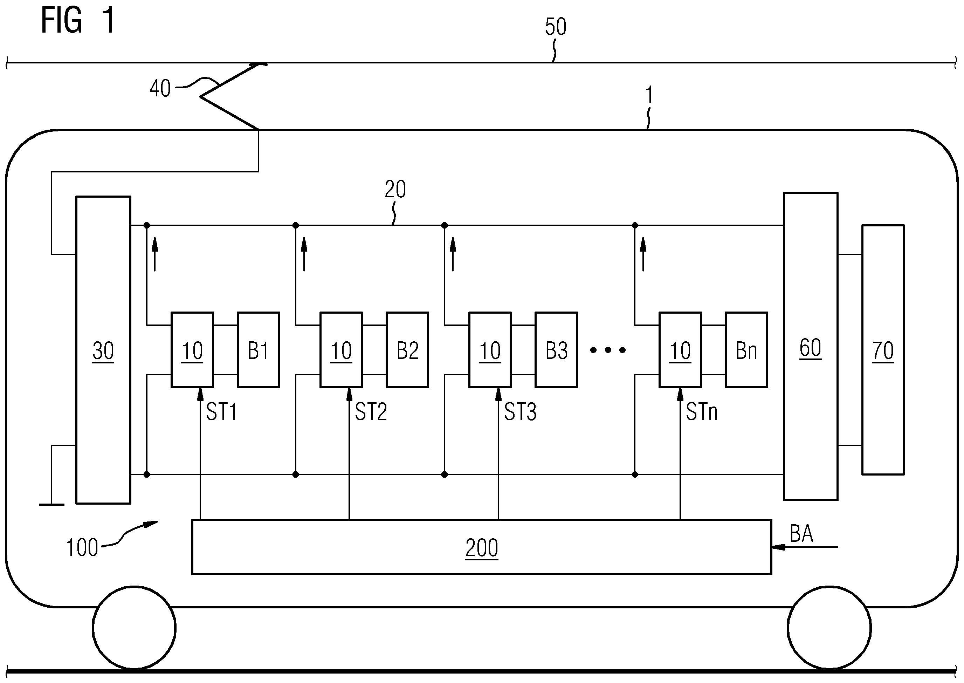

Die Figur 1 zeigt ein Ausführungsbeispiel für ein erfindungsgemäßes Schienenfahrzeug 1, das mit einem Gleichspannungszwischenkreis 20 ausgestattet ist. Der Gleichspannungszwischenkreis 20 ist über einen in der Figur 1 linken Umrichter 30 und einen Stromabnehmer 40 an ein externes Energieversorgungsnetz 50 angeschlossen bzw. anschließbar.

Über einen in der Figur 1 rechten Umrichter 60 steht der Gleichspannungszwischenkreis 20 mit einem Antriebssystem 70 des Schienenfahrzeugs 1 und/oder einem Bordnetz des Schienenfahrzeugs 1 in Verbindung.

Zur Stützung der Zwischenkreisspannung des Gleichspannungszwischenkreises 20, beispielsweise für den Fall, dass das Schienenfahrzeug 1 in einen nichtelektrifizierten Abschnitt eines Streckennetzes einfährt, ist das Schienenfahrzeug 1 mit einem Batteriesystem 100 ausgestattet, das eine Vielzahl an Batterien B1, B2, ... Bn (n>1) umfasst. Die Batterien B1 bis Bn sind jeweils über einen individuell zugeordneten DC/DC-Wandler 10 an den Gleichspannungszwischenkreis 20 angeschlossen.

Die DC/DC-Wandler 10 stehen mit einer Steuereinrichtung 200 in Verbindung, die über eine Ansteuerung der DC/DC-Wandler 10 mittels Steuersignalen ST1, ST2, ..., STn den Energiefluss mit Blick auf Energieflusshöhe und Energieflussrichtung für die ihr jeweils zugeordnete Batterie einstellen können.

Die Steuereinrichtung 200 ist derart ausgestaltet, dass sie jeder Batterie B1, B2, ... Bn jeweils einen Gewichtungswert zuordnet, der einen Sollanteil der jeweiligen Batterie bei der Aufteilung von Entnahme- oder Ladebelastung aus dem bzw. in das Batteriesystem 100 auf die Batterien beschreibt.

Die Steuereinrichtung 200 belastet anschließend - im Falle einer externen Belastungsanforderung BA an das Batteriesystem 100 - die Batterien B1, B2, ... Bn gemäß ihrem jeweiligen Gewichtungswert, sofern ihr Belastungsvermögen dies ermöglicht. Andernfalls, wenn eine oder mehr Batterien überlastet werden würden, werden die betroffenen Batterien mit ihrer jeweiligen Grenzbelastung belastet, und es wird die von den betroffenen Batterien nicht geleistete Restbelastung auf die noch nicht überlasteten Batterien verteilt.

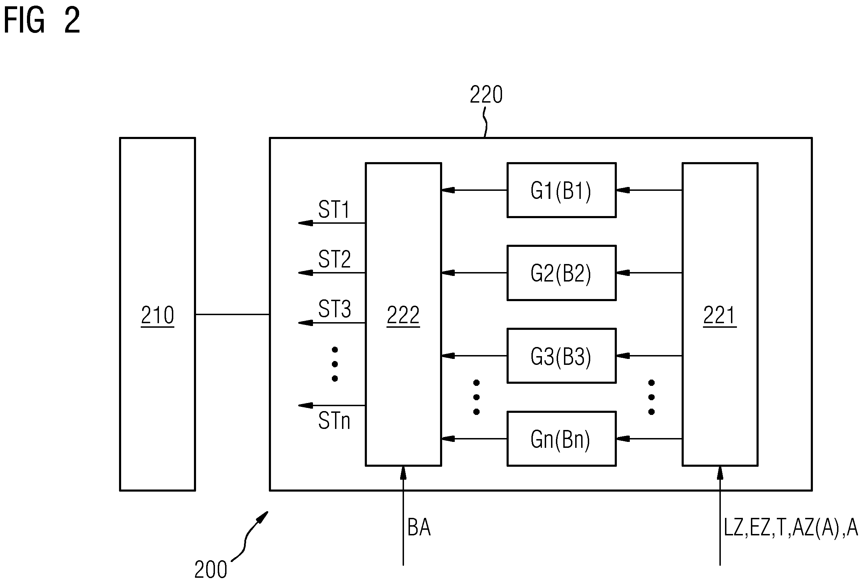

Die Figur 2 zeigt ein Ausführungsbeispiel für die Steuereinrichtung 200 gemäß Figur 1 näher im Detail. Die Steuereinrichtung 200 umfasst eine Recheneinrichtung 210 und einen Speicher 220, in dem unter anderem ein Gewichtungswertermittlungsmodul 221 und ein Belastungsverteilmodul 222 abgespeichert sind.

Führt die Recheneinrichtung 210 das Gewichtungswertermittlungsmodul 221 aus, so kann sie für jede der Batterien B1 bis Bn jeweils einen Gewichtungswert G1 bis Gn ermitteln, der den Sollanteil der jeweiligen Batterie B1 bis Bn bei der Aufteilung von Entnahme- oder Ladebelastung aus dem bzw. in das Batteriesystem 100 beschreibt.

Bei der Ermittlung bzw. Berechnung der Gewichtungswerte G1 bis Gn wird das Gewichtungswertermittlungsmodul 221 vorzugsweise für jede der Batterien B1 bis Bn jeweils extern eingegebene Batterieparameter berücksichtigen, wie beispielsweise den jeweiligen Ladezustand LZ, den jeweiligen Energiezustand EZ, den Alterungszustand AZ und/oder das Alter A der jeweiligen Batterie. Die Gewichtungswerte $Gi$ $(i=l...n)$ werden für den Fall eines Entladebetriebs vorzugsweise größer gewählt, wenn die Batterien mehr geladen bzw. energiehaltiger sind, und für den Fall eines Ladebetriebs vorzugsweise größer gewählt, wenn die Batterien mehr entladen bzw. energieärmer sind. Die Gewichtungswerte $Gi$ $(i=l...n)$ können beispielsweise für die i-te Batterie berechnet werden gemäß:

```
Gi = (LZ(i)·EZ(i))/A(i) für den Fall eines Entladebetriebs

Gi = 1/(LZ(i)·EZ(i)·A(i)) für den Fall eines Ladebetriebs
```

mit

```
LZ(i) = Qist(i)/Qmax(i)

EZ(i) = Eist(i)/Emax(i)
```

wobei Qist die gespeicherte Ladung, Qmax die maximal speicherbare Ladung, Eist die gespeicherte Energie, Emax die maximal speicherbare Energie und A das Alter beispielsweise in Monaten angibt.

Die von dem Gewichtungswertermittlungsmodul 221 errechneten Gewichtungswerte G1 bis GN werden in entsprechend zugeordneten Speicherabschnitten des Speichers 220 abgespeichert, damit das Belastungsverteilmodul 222 auf die ermittelten Gewichtungswerte zugreifen kann.

Führt die Recheneinrichtung 210 das Belastungsverteilmodul 222 aus, so wird eine externe Belastungsanforderung BA auf die Batterien B1 bis Bn auf der Basis der Gewichtungswerte G1 bis Gn verteilt und es werden ausgangsseitig entsprechende Steuersignale ST1 bis STn erzeugt, die zur Ansteuerung der DC/DC-Wandler 10 dienen und die jeweilige Belastung der zugehörigen Batterie festlegen.

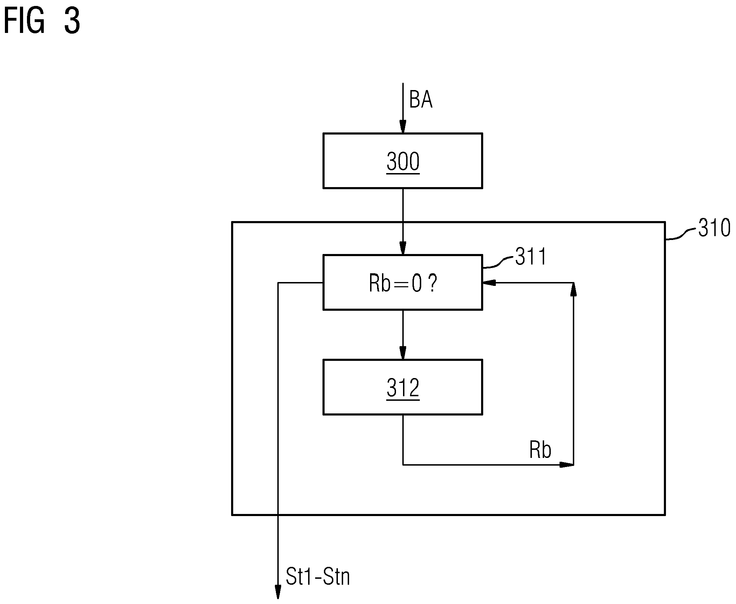

Die Figur 3 zeigt beispielhaft in Form eines Flussdiagramms die Arbeitsweise des Belastungsverteilmoduls 222 näher im Detail:

Im Falle einer externen Belastungsanforderung BA an das Batteriesystem 100 wird in einem ersten Verteilschritt 300 jede Batterie gemäß ihrem jeweiligen Gewichtungswert belastet, sofern ihr Belastungsvermögen dies ermöglicht.

Ist eine faire bzw. gewichtungswertkonforme Verteilung möglich, ohne dass eine Überlastungssituation auftritt, so bleibt keine zu verteilende Restbelastung Rb übrig bzw. die Restbelastung Rb ist gleich Null und es können die entsprechenden Steuersignale ST erzeugt werden.

Tritt eine Überlastungssituation auf, weil eine oder mehr Batterien überlastet werden würden, so wird den betroffenen Batterien ihre jeweilige Grenzbelastung zugeordnet.

Kann einer oder mehr Batterien lediglich ihre Grenzbelastung zugeordnet werden, so verbleibt bei dem ersten Verteilschritt 300 eine nicht zugeordnete Restbelastung Rb, die auf die noch nicht überlasteten Batterien nachträglich verteilt werden muss.

Die Verteilung der Restbelastung Rb erfolgt in einem oder mehreren aufeinanderfolgenden Verteilschritten 310, wobei in jedem Verteilschritt jeweils in einem ersten Teilschritt 311 geprüft wird, ob noch zu verteilende Restbelastung Rb übrig ist.

Ist dies der Fall, wird in einem zweiten Teilschritt 312 die noch zu verteilende Restbelastung Rb auf die verbliebenen, noch nicht überlasteten Batterien gemäß ihrem jeweiligen Gewichtungswert verteilt, sofern ihr Leistungsvermögen dies ermöglicht; andernfalls, wenn eine oder mehr Batterien überlastet werden würden, werden die betroffenen Batterien wieder mit ihrer jeweiligen Grenzbelastung belastet. Die von den betroffenen Batterien nicht geleistete, also noch verbleibende Restbelastung Rb wird durch Wiederholung der Verteilschritte 310 weiter verteilt.

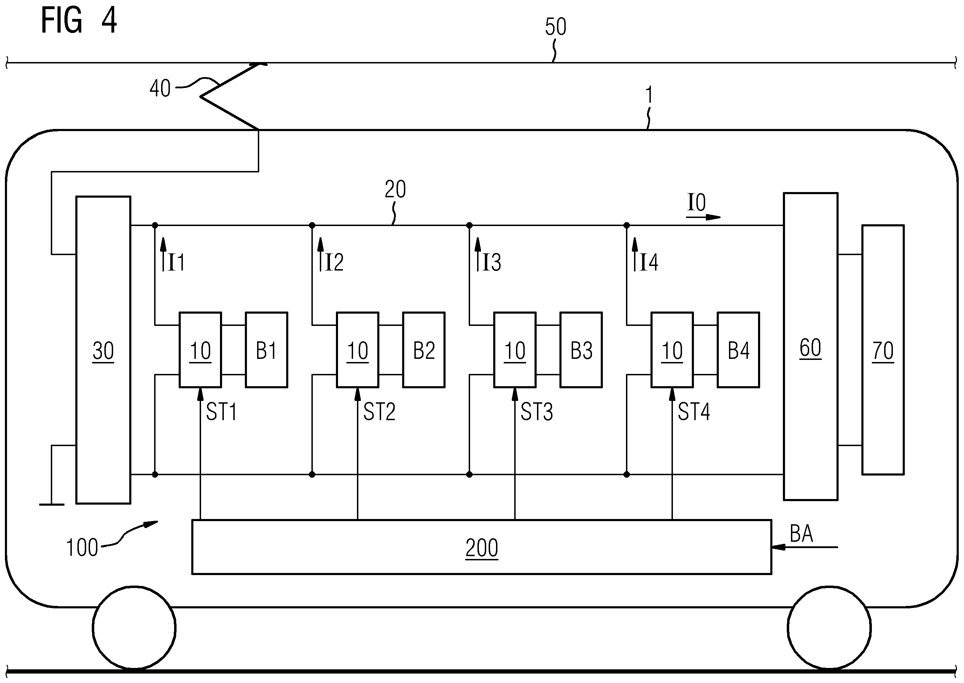

Die Figur 4 zeigt das Schienenfahrzeug 1 gemäß Figur 1 beispielhaft konkret für den Fall, dass das Batteriesystem 100 vier Batterien B1 bis B4 aufweist und aus dem Batteriesystem 100 gemäß einer externen Stromanforderung bzw. externen Belastungsanforderung BA hin ein Entnahmestrom I0 von beispielsweise 350 A entnommen werden soll. Dabei wird beispielhaft davon ausgegangen, dass das Gewichtungswertermittlungsmodul 221 auf der Basis der externen Batterieparameter folgende Gewichtungswerte G1 bis G4 ermittelt und im Speicher 220 abgelegt hat:

$$G1 = 0,8$$

$$G2 = 0,7$$

$$G3 = 0,5$$

$$G4 = 0,2$$

Das Belastungsverteilmodul 222 wird in einem solchen Fall in einem ersten Verteilschritt versuchen, den Entnahmestrom I0 fair bzw. gemäß den Gewichtungswerten zu verteilen. Dabei wird sie zunächst die Gewichtungswerte aufsummieren gemäß

$$Gsum1 = \sum_{i=1}^{n=4} Gi = 2,2$$

unter Bildung einer Gewichtungswertsumme Gsum1 und mit dieser als Zwischenergebnis folgende Stromwerte erhalten:

$$I1 = G1/Gsum1 \cdot 350\ A = 127,3\ A > Imax = 100\ A$$

$$I2 = G2/Gsum1 \cdot 350\ A = 111,4\ A > Imax = 100\ A$$

$$I3 = G3/Gsum1 \cdot 350\ A = 79,5\ A < Imax = 100\ A$$

$$I4 = G4/Gsum1 \cdot 350\ A = 31,8\ A < Imax = 100\ A$$

Geht man beispielhaft davon aus, dass die Batterien B1 bis B4 jeweils mit einem maximalen Entnahmestrom bzw. maximalen Grenzstrom Imax=100 A, der das strombezogene Belastungsvermögen definiert, belastet werden dürfen, so wird das Belastungsverteilmodul 222 also feststellen, dass die Batterien B1 und B2 überlastet werden würden, da bei der obigen Verteilung 27,3 A bzw. 11,4 A mehr aus den Batterien B1 und B2 entnommen werden würden, als zulässig wäre.

Aus diesem Grunde wird das Belastungsverteilmodul 222 die Batterien B1 und B2 jeweils mit ihrer Grenzbelastung belasten bzw. den maximal zulässigen Entnahmestrom 100 A aus den Batterien B1 und B2 entnehmen.

Die übrigbleibenden 38,7 A, die als Restbelastung Rb aufzufassen sind, müssen nun auf die verbleibenden zwei Batterien B3 und B4 verteilt werden. Auch das Verteilen der Restbelastung Rb bzw. des Reststroms von 38,7 A erfolgt nun wieder unter Berücksichtigung der Gewichtungswerte, und zwar unter Bildung einer aktualisierten, sich auf die übrig gebliebenen Batterien B3 und B4 beziehenden Gewichtungswertsumme Gsum2:

$$Gsum2 = \sum_{i=3}^{n=4} Gi = 0,7$$

Mit dieser aktualisierten Gewichtungswertsumme Gsum2 erhält das Belastungsverteilmodul 222 anschließend folgende weitere Ergebnisse:

$$I1 = Imax = 100\ A$$

$$I2 = Imax = 100\ A$$

$$I3 = 79,5\ A\ + G3/Gsum2 \cdot 38,7\ A = 79,5\ A + 27,6\ A = 107,1\ A$$

$$I4 = 31,8\ A\ + G4/Gsum2 \cdot 38,7\ A = 31,8\ A + 11,1 = 42,9\ A$$

Auch bei diesem zweiten Verteilschritt wird das Belastungsverteilmodul 222 feststellen, dass eine der Batterien, und zwar die Batterie B3, überlastet werden würde, sodass dieser Batterie B3 wiederum nur der maximale Entnahmestrom zugewiesen werden kann. Es verbleibt nun noch ein Reststrom von 7,1 A, der in einem dritten Verteilschritt der einzig verbliebenen Batterie B4 zugeordnet wird, sodass folgendes Endergebnis erhalten wird:

$$I1 = Imax = 100\ A$$

$$I2 = Imax = 100\ A$$

$$I3 = Imax = 100\ A$$

$$I4 = 42,9\ A + 7,1\ A = 50\ A$$

Die Steuersignale ST1 bis ST4 für die DC/DC-Wandler 10 gemäß Figur 4 werden entsprechend so eingestellt, dass die Batterien B1 bis B4 mit den oben ausgerechneten Entnahmeströmen belastet werden.

Im Zusammenhang mit der Figur 4 wurde die Aufteilung der Belastung auf die Batterien B1 bis B4 des Batteriesystems 100 beispielhaft für den Fall erläutert, dass eine externe Belastungsanforderung BA in Form eines vorgegebenen Entnahmestroms vorliegt. Die obigen Ausführungen gelten entsprechend für den Fall, dass die externe Belastungsanforderung BA eine Aufnahme eines vorgegebenen Ladestroms im Batteriesystem 100 vorsieht, und der Ladestrom auf die einzelnen Batterien B1 bis B4 verteilt werden muss.

Auch kann die Belastungsanforderung BA leistungsbezogen und nicht strombezogen sein, die Aufteilung erfolgt dann entsprechend leistungsbezogen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| 1 | Schienenfahrzeug |
| 10 | DC/DC-Wandler |
| 20 | Gleichspannungszwischenkreis |
| 30 | Umrichter |
| 40 | Stromabnehmer |
| 50 | externes Energieversorgungsnetz |
| 60 | Umrichter |
| 70 | Antriebssystem |
| 100 | Batteriesystem |
| 200 | Steuereinrichtung |
| 210 | Recheneinrichtung |
| 220 | Speicher |
| 221 | Gewichtungswertermittlungsmodul |
| 222 | Belastungsverteilmodul |
| 300 | Verteilschritt |
| 310 | Verteilschritt |
| 311 | Teilschritt |
| 312 | Teilschritt |

| A | Alter |
| AZ | Alterungszustand |
| BA | Belastungsanforderung |
| B1-Bn | Batterien |
| EZ | Energiezustand |
| G1-Gn | Gewichtungswerte |
| I0 | Entladestrom |
| LZ | Ladezustand |
| Rb | Restbelastung |
| ST1-STn | Steuersignale |

**Patentansprüche**

1. Verfahren zum Betreiben eines zwei oder mehr Batterien (B1-Bn) aufweisenden Batteriesystems (100), **dadurch gekennzeichnet, dass**

   - jeder Batterie (B1-Bn) jeweils ein Gewichtungswert (G1-Gn) zugeordnet wird, der einen Sollanteil der jeweiligen Batterie (B1-Bn) bei der Aufteilung von Entnahme- oder Ladebelastung aus dem bzw. in das Batteriesystem (100) auf die Batterien (B1-Bn) beschreibt,
   - im Falle einer externen Belastungsanforderung (BA) an das Batteriesystem (100) die Batterien (B1-Bn) gemäß ihrem jeweiligen Gewichtungswert (G1-Gn) belastet werden, sofern ihr Belastungsvermögen dies ermöglicht, und
   - andernfalls, wenn eine oder mehr Batterien (B1-Bn) überlastet werden würden, die betroffene Batterie (B1-Bn) oder die betroffenen Batterien (B1-Bn) mit ihrer jeweiligen Grenzbelastung belastet werden und die von den betroffenen Batterien (B1-Bn) nicht geleistete Restbelastung (Rb) auf die noch nicht überlasteten Batterien (B1-Bn) verteilt wird.

2. Verfahren nach Anspruch 1,
**dadurch gekennzeichnet, dass**
die Verteilung der Restbelastung (Rb) in einem oder mehreren aufeinanderfolgenden Verteilschritten (310) erfolgt, wobei in jedem Verteilschritt (310) jeweils

- in einem ersten Teilschritt (311) geprüft wird, ob noch Restbelastung (Rb) zu verteilen ist,
- in einem zweiten Teilschritt (312) die noch zu verteilende Restbelastung (Rb) auf die verbliebenen, noch nicht überlasteten Batterien (B1-Bn) gemäß ihrem jeweiligen Gewichtungswert (G1-Gn) verteilt wird, sofern ihr Leistungsvermögen dies ermöglicht, und
- andernfalls, wenn eine oder mehr Batterien (B1-Bn) überlastet werden würden, die betroffene Batterie (B1-Bn) oder die betroffenen Batterien (B1-Bn) mit ihrer jeweiligen Grenzbelastung belastet werden und die von den betroffenen Batterien (B1-Bn) nicht geleistete, also noch verbleibende Restbelastung (Rb) in einem nachfolgenden Verteilschritt (310) weiter verteilt wird.

3. Verfahren nach einem der voranstehenden Ansprüche,
**dadurch gekennzeichnet, dass**

- die Entnahme- und Ladebelastung, die Restbelastung (Rb) und die Grenzbelastung jeweils strombezogen sind und jeder Batterie (B1-Bn) jeweils ein Gewichtungswert (G1-Gn) zugeordnet wird, der einen Sollstromanteil der jeweiligen Batterie (B1-Bn) bei der Aufteilung von Entnahme- oder Ladestrom aus dem bzw. in das Batteriesystem (100) auf die Batterien (B1-Bn) beschreibt,
- im Falle einer externen Stromanforderung (I0) an das Batteriesystem (100) die Batterien (B1-Bn) gemäß ihrem jeweiligen Gewichtungswert (G1-Gn) strommäßig belastet werden, sofern ihr strombezogenes Belastungsvermögen dies ermöglicht, und
- andernfalls, wenn eine oder mehr Batterien (B1-Bn) überlastet werden würden, die betroffene Batterie (B1-Bn) oder die betroffenen Batterien (B1-Bn) mit ihrem jeweiligen maximalen Grenzstrom (Imax) belastet werden und der von den betroffenen Batterien (B1-Bn) nicht aufgenommene oder abgegebene Reststrom auf die noch nicht überlasteten Batterien (B1-Bn) verteilt wird.

4. Verfahren nach Anspruch 3,
**dadurch gekennzeichnet, dass**
die Verteilung des Reststroms in einem oder mehreren aufeinanderfolgenden Verteilschritten (310) erfolgt, wobei in jedem Verteilschritt (310) jeweils

- in einem ersten Teilschritt (311) geprüft wird, ob noch Reststrom zu verteilen ist,
- in einem zweiten Teilschritt (312) der noch zu verteilende Reststrom auf die verbliebenen, noch nicht überlasteten Batterien (B1-Bn) gemäß ihrem jeweiligen Gewichtungswert (G1-Gn) verteilt wird, sofern ihr strombezogenes Belastungsvermögen dies ermöglicht, und
- andernfalls, wenn eine oder mehr Batterien (B1-Bn) überlastet werden würden, die betroffene Batterie (B1-Bn) oder die betroffenen Batterien (B1-Bn) mit ihrem jeweiligen Grenzstrom (Imax) belastet werden und der von den betroffenen Batterien (B1-Bn) nicht abgegebene oder aufgenommene Reststrom in einem nachfolgenden Verteilschritt (310) weiter verteilt wird.

5. Verfahren nach einem der voranstehenden Ansprüche 1 bis 2, **dadurch gekennzeichnet, dass**

- die Entnahme- und Ladebelastung, die Restbelastung (Rb) und die Grenzbelastung jeweils leistungsbezogen sind und jeder Batterie (B1-Bn) jeweils ein Gewichtungswert (G1-Gn) zugeordnet wird, der einen Sollleistungsanteil der jeweiligen Batterie (B1-Bn) bei der Aufteilung von Entnahmeoder Ladeleistung aus dem bzw. in das Batteriesystem (100) auf die Batterien (B1-Bn) beschreibt,
- im Falle einer externen Leistungsforderung an das Batteriesystem (100) die Batterien (B1-Bn) gemäß ihrem jeweiligen Gewichtungswert (G1-Gn) leistungsmäßig belastet werden, sofern ihr Leistungsvermögen dies ermöglicht, und
- andernfalls, wenn eine oder mehr Batterien (B1-Bn) überlastet werden würden, die betroffene Batterie (B1-Bn) oder die betroffenen Batterien (B1-Bn) mit ihrer jeweiligen maximalen Grenzleistung betrieben und die von den betroffenen Batterien (B1-Bn) nicht übernommene Restleistung auf die noch nicht überlasteten Batterien (B1-Bn) verteilt wird.

**6.** Verfahren nach Anspruch 5,
**dadurch gekennzeichnet, dass**
die Verteilung der Restleistung in einem oder mehreren aufeinanderfolgenden Verteilschritten (310) erfolgt, wobei in jedem Verteilschritt (310) jeweils

- in einem ersten Teilschritt (311) geprüft wird, ob noch Restleistung zu verteilen ist,
- in einem zweiten Teilschritt (312) die noch zu verteilende Restleistung auf die verbliebenen, noch nicht überlasteten Batterien (B1-Bn) gemäß ihrem jeweiligen Gewichtungswert (G1-Gn) verteilt wird, sofern ihr Leistungsvermögen dies ermöglicht, und
- andernfalls, wenn eine oder mehr Batterien (B1-Bn) überlastet werden würden, die betroffene Batterie (B1-Bn) oder die betroffenen Batterien (B1-Bn) mit ihrer jeweiligen Grenzleistung betrieben werden und in die von den betroffenen Batterien (B1-Bn) nicht geleistete, also noch verbleibende Restleistung in einem nachfolgenden Verteilschritt (310) weiter verteilt wird.

**7.** Verfahren nach einem der voranstehenden Ansprüche,
**dadurch gekennzeichnet, dass**
der Gewichtungswert (G1-Gn) in Abhängigkeit vom Ladezustand (LZ) der jeweiligen Batterie (B1-Bn) ermittelt wird.

**8.** Verfahren nach einem der voranstehenden Ansprüche,
**da**dur**ch gekennzeichnet**, dass
der Gewichtungswert (G1-Gn) in Abhängigkeit vom Energiezustand (Eist) der jeweiligen Batterie (B1-Bn) ermittelt wird.

**9.** Verfahren nach einem der voranstehenden Ansprüche,
d a durc h g e k e n n z e ichn e t, dass
der Gewichtungswert (G1-Gn) in Abhängigkeit von der Batterietemperatur der jeweiligen Batterie (B1-Bn) ermittelt wird.

**10.** Verfahren nach einem der voranstehenden Ansprüche,
**da**dur**ch gekennzeichnet**, dass
der Gewichtungswert (G1-Gn) in Abhängigkeit vom Alterungszustand (AZ) der jeweiligen Batterie (B1-Bn) ermittelt wird.

**11.** Verfahren nach einem der voranstehenden Ansprüche,
**dadurch gekennzeichnet, dass**
der Gewichtungswert (G1-Gn) für den Ladebetrieb und den Entladebetrieb unterschiedlich festgelegt wird.

**12.** Anordnung mit einem zwei oder mehr Batterien (B1-Bn) aufweisenden Batteriesystem (100),
**dadurch gekennzeichnet, dass**

- eine Steuereinrichtung (200) vorhanden ist, die jeder Batterie (B1-Bn) jeweils einen Gewichtungswert (G1-Gn) zuordnet, der einen Sollanteil der jeweiligen Batterie (B1-Bn) bei der Aufteilung von Entnahme- oder Ladebelastung aus dem bzw. in das Batteriesystem (100) auf die Batterien (B1-Bn) beschreibt,
- die Steuereinrichtung (200) im Falle einer externen Belastungsanforderung (BA) an das Batteriesystem (100) die Batterien (B1-Bn) gemäß ihrem jeweiligen Gewichtungswert (G1-Gn) belastet, sofern ihr Belastungsvermögen dies ermöglicht, und
- die Steuereinrichtung (200) andernfalls, wenn eine oder mehr Batterien (B1-Bn) überlastet werden würden, die betroffene Batterie (B1-Bn) oder die betroffenen Batterien (B1-Bn) mit ihrer jeweiligen Grenzbelastung belastet und die von den betroffenen Batterien (B1-Bn) nicht geleistete Restbelastung (Rb) auf die noch nicht überlasteten Batterien (B1-Bn) verteilt.

**13.** Anordnung nach Anspruch 12,
**dadurch gekennzeichnet, dass**
die Steuereinrichtung (200) eine Recheneinrichtung (210) und einen Speicher (220) umfasst, in dem ein Gewichtungswertermittlungsmodul (221) und ein Belastungsverteilmodul (222) abgespeichert sind,

- wobei die Recheneinrichtung 210 bei Ausführung des Gewichtungswertermittlungsmoduls (221) für jede der Batterien (B1 bis Bn) jeweils einen Gewichtungswert (G1-Gn) ermittelt, der den Sollanteil der jeweiligen Batterie (B1-Bn) bei der Aufteilung von Entnahme- oder Ladebelastung aus dem bzw. in das Batteriesystem (100) beschreibt, und
- wobei die Recheneinrichtung (210) bei Ausführung des Belastungsverteilmoduls (222) auf eine externe Belastungsanforderung (BA) hin die Belastung auf die Batterien (B1-Bn) auf der Basis der Gewichtungswerte (G1-Gn) verteilt und ausgangsseitig entsprechende Steuersignale (ST1-STn) zur Ansteuerung des Batteriesystems (100) erzeugt.

14. Fahrzeug, insbesondere Schienenfahrzeug (1),
    **dadurch gekennzeichnet, dass**
    das Fahrzeug mit einer Anordnung nach einem der voranstehenden Ansprüche 12 oder 13 ausgestattet ist.

FIG 1

EP 4 145 658 A2

# FIG 2

LZ,EZ,T,AZ(A),A

221

220

G1(B1)   G2(B2)   G3(B3)   Gn(Bn)

• • •

• • •

222

BA

ST1   ST2   ST3   • • •   STn

200

210

FIG 3

FIG 4

EP 4 145 658 A2